## Europäisches Patentamt

## European Patent Office

## Office européen des brevets

(19)

(11) Veröffentlichungsnummer: **0 118 586**
**A2**

(12) **EUROPÄISCHE PATENTANMELDUNG**

(21) Anmeldenummer: **83104088.6**

(22) Anmeldetag: **26.04.83**

(51) Int. Cl.³: **B 60 P 1/64**

(30) Priorität: **26.10.82 DE 3239622**

(43) Veröffentlichungstag der Anmeldung:
**19.09.84 Patentblatt 84/38**

(84) Benannte Vertragsstaaten:
**AT BE CH DE FR GB IT LI LU NL SE**

(71) Anmelder: **Schaller, Manfred**
**Vorhölzerstrasse 3**
**D-8000 München 71(DE)**

(72) Erfinder: **Schaller, Manfred**
**Vorhölzerstrasse 3**
**D-8000 München 71(DE)**

(74) Vertreter: **Haft, Berngruber, Czybulka**
**Hans-Sachs-Strasse 5**
**D-8000 München 5(DE)**

(54) **Container-Fahrzeug.**

(57) Die Erfindung bezieht sich auf ein Container-Fahrzeug bestehend aus einem Wagen mit einem Rahmen (2) sowie aus mindestens einem auf dem Wagenrahmen gehaltenen und von diesem mittels einer Ladevorrichtung (4) absetzbaren und wieder auf das Fahrzeug aufsetzbaren Container (3). Die Ladevorrichtung ist so ausgestaltet, daß der Container im wesentlichen horizontal von dem Container-Fahrzeug abgesetzt werden kann. Als Ladevorrichtung wird bevorzugt eine Teleskoprahmenanordnung (5) gewählt. Diese Teleskoprahmenanordnung (5a) kann auch auf den Boden absenkbar sein, so daß der Container direkt auf den Boden abgestellt werden kann.

Fig. 1

EP 0 118 586 A2

Container-Fahrzeug

Die Erfindung bezieht sich auf ein Container-Fahrzeug gemäß dem Oberbegriff des ersten Patentanspruches.

Beim Waren- und Güterverkehr ist die Bedeutung von Containern in den letzten Jahren ständig gewachsen. Container bieten den Vorteil, daß die zu transportierenden Waren und Güter be- und entladen werden können, ohne daß das eigentliche Transportfahrzeug während dieses Vorganges benötigt wird. Vielmehr wird der Container zum Be- und Entladen von dem Transportfahrzeug mittels einer Absetzvorrichtung abgesetzt, wonach das Transportfahrzeug, so z.B. ein Lastkraftwagen, für weitere Aufgaben eingesetzt werden kann.

Zum Zwecke des Absetzens des Containers von dem Transportfahrzeug und zum Wiederaufsetzen auf das Transportfahrzeug sind eine Vielzahl von Ladevorrichtungen bekannt. Gemäß der DE-PS 16 30 543 weist eine solche Ladevorrichtung zwei zu beiden Seiten des Containers angeordnete, in der jeweiligen Schwenkebene verschwenkbare Kolben-Zylindereinheiten auf, deren obere Enden ein Gelenk bilden und deren untere Enden einerseits fest und andererseits verschieblich gegenüber dem Rahmen z.B. des Transportfahrzeuges gelenkig gelagert sind. Die unteren Enden der Kolben-Zylindereinheiten liegen an schwenkbar am Rahmen angeordneten und an diesem wahlweise arretierbaren Stützschienen an. Zwischen dem Gelenk und der Ladeflächenmitte ist ein ausziehbares Stützrohr beidseitig quer zur Fahrzeuglängsachse schwenkbar angeordnet. Die Stützschienen können gemäß der DE-AS 17 55 332 teleskopartig ausziehbar ausgebildet und an ihren äußeren Enden mit schwenkbaren Klappstützen versehen sein. Der auf dem Transportfahrzeug aufgesetzte Container wird mit dieser kranartigen Vorrichtung in einer kreisförmigen Bewegung entweder auf ein anderes Fahrzeug, einen Rahmen oder direkt auf den Boden abgesetzt, so daß sich der Container jetzt seitlich von dem Transportfahrzeug befindet. Die Aufsetzbewegung erfolgt im Gegensinne.

Derartige Ladevorrichtungen sind mechanisch sehr aufwendig und daher teuer in der Herstellung und in der Wartung.

Der Erfindung liegt die Aufgabe zugrunde für ein Container-Fahrzeug der in Frage stehenden Art eine einfach konstruierte Ladevorrichtung anzugeben, mit der das Ab- und Aufsetzen des Containers erleichtert wird.

Diese Aufgabe ist gemäß der Erfindung durch die im kennzeichnenden Teil des Patentanspruches 1 angegebenen Merkmale gelöst.

Im Gegensatz zu bekannten Ladevorrichtungen wird der Container beim Absetzen zunächst lediglich horizontal in Richtung auf den Absetzort bewegt. Der Container kann z.B. auf ein neben dem Wagen, z.B. einem Lastkraftwagen angeordnetes Gestell gleitend überführt werden, wobei zwischen dem Rahmen des Lastkraftwagens und dem Gestell Stützschienen angeordnet werden und der Container z.B. mit Hilfe einer Seilwinde auf das Gestell gezogen wird. Das Aufsetzen des Containers von dem Gestell auf den Lastkraftwagen erfolgt im Gegensinne. Bei dem Absetz- und Aufsetzvorgang braucht demnach im wesentlichen nur der Reibungswiderstand des Containers überwunden werden. Dieser kann z.B. dadurch verringert werden, daß der Container auf Rollen läuft.

Das Gestell für den abzusetzenden Container kann ein separates Gestell sein, das am Absetzort aufgestellt wird, oder ein mit dem Rahmen des Transportfahrzeuges verbundenes Gestell sein, das entweder am Absetzort verbleibt oder nach Abstützen des Containers auf dem Boden entfernt werden kann.

Vorzugsweise weist die Ladevorrichtung eine Teleskopanordnung auf, die fest mit dem Wagenrahmen verbunden ist. Der Container ruht dann während des Fahrbetriebes verriegelt auf einem rahmenartigen Teleskopelement. Nach Abstützen der rahmenartigen Teleskopvorrichtung kann diese unter Mitnahme des Containers ausgefahren werden. Befindet sich der Container am Absetzort, so wird er unterstützt, wonach die Teleskopvorrichtung wieder eingezogen werden kann und zum Aufnehmen und Absetzen eines weiteren Containers bereit ist.

Es ist jedoch auch möglich, die rahmenartige Teleskopvorrichtung am Rahmen des Transportfahrzeuges absenkbar auszugestalten. Ist der Container dann in Richtung auf den Absetzort ausgefahren, so wird die abgestützte Teleskopvorrichtung abgesenkt , bis der Container sich auf dem Boden abstützt. Die Teleskopvorrichtung kann dann eingefahren und in die Ausgangslage am Wagenrahmen angehoben werden.

Eine Teleskopladevorrichtung gemäß der Erfindung kann zum Absetzen von Containern seitlich von dem Transportfahrzeug benutzt werden, wenn die Ausfahrrichtung der Teleskopvorrichtung quer zur Längsachse des Wagenrahmens verläuft. Wird die Teleskopanordnung geschwenkt, so daß die Ausfahrrichtung in Längsrichtung des Wagenrahmens verläuft, so kann auf diese Weise ein Container direkt hinter dem Transportfahrzeug abgesetzt werden.

- 4 -

Ein Container-Fahrzeug mit einer im Sinne der Erfindung ausgebildeten Ladevorrichtung kann auch für Leichtbau-Container eingesetzt werden, die mit üblichen kranartigen Ladevorrichtungen, in denen der Container aufgehängt wird, nur unter Zuhilfenahme von Sonderkonstruktionen, im allgemeinen eigenen Aufhängegestellen für Container abgesetzt und wieder auf das Transportfahrzeug aufgesetzt werden können. Bei einem Container-Fahrzeug gemäß der Erfindung werden Kräfte auf den Container aufgrund der horizontalen Verschiebebewegung lediglich in der Fläche des versteiften Grundrahmens ausgeübt, nicht jedoch auf dessen Aufbauten.

Weitere Ausgestaltungen und Vorteile der Erfindung gehen aus den Unteransprüchen in Verbindung mit der nachfolgenden Beschreibung hervor, in der die Erfindung anhand der Zeichnung näher erläutert ist. In der Zeichnung stellen dar:

Figur 1    eine Aufsicht auf ein Container-Fahrzeug mit einer Ladevorrichtung gemäß der Erfindung, während des Absetzens eines Containers seitlich von dem Fahrzeug;

Figur 2    eine Ansicht des Container-Fahrzeuges und des abgesetzten Containers;

Figur 3    eine perspektivische Darstellung einer Ladevorrichtung des Fahrzeuges gemäß Figur 1;

Figur 4    eine Ansicht einer Ladevorrichtung in einem zweiten Ausführungsbeispiel gemäß der Erfindung;

Figur 5    eine perspektivische Schemaansicht einer Ladevorrichtung gemäß einem weiteren Ausführungsbeispiel der Erfindung und

Figur 6     eine schematische Darstellung eines Container-
            Fahrzeugs mit einer Ladevorrichtung gemäß einem
            vierten Ausführungsbeispiel;

Figur 7     eine schematische Seitenansicht eines Teils
            eines Container-Fahrzeuges mit einer, einen Container tragenden Ladevorrichtung gemäß der Erfindung;

Figur 8     eine perspektivische Teilansicht, teilweise
            in Explosionsdarstellung, der Ladevorrichtung
            gemäß Figur 7;

Figur 9     einen vergrößerten Querschnitt durch bei der
            Ladevorrichtung verwendete Profile.

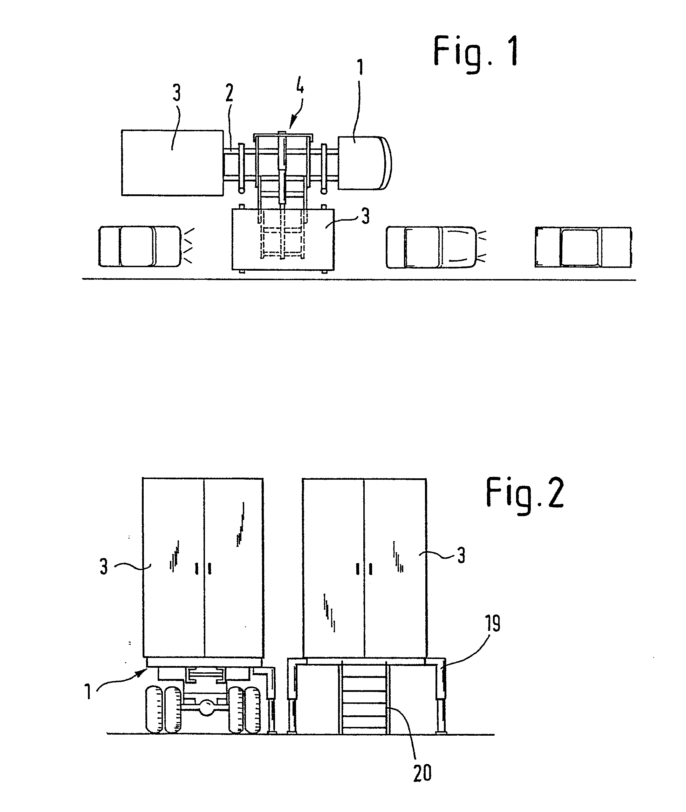

In Figur 1 ist ein Lastkraftwagen 1 mit einem langgestreckten
Fahrzeugrahmen 2 dargestellt, wobei das Fahrzeug zwei Container 3 aufnehmen kann, die auf dem Rahmen hintereinander
abgesetzt sind. Mit dem Rahmen 2 des Fahrzeuges ist für jeden
Container eine Ladevorrichtung 4 vorgesehen, die in Figur 1
schematisch nur für den vorderen Container dargestellt ist und
zum Absetzen des Containers seitlich von dem Fahrzeug dient.
Der hintere Container 3 kann mit einer ähnlichen Ladevorrichtung abgesetzt werden, wobei dieses Absetzen bevorzugt in
Längsrichtung des Fahrzeuges erfolgt, so daß der Container
hinter dem Lastkraftwagen abgesetzt wird.

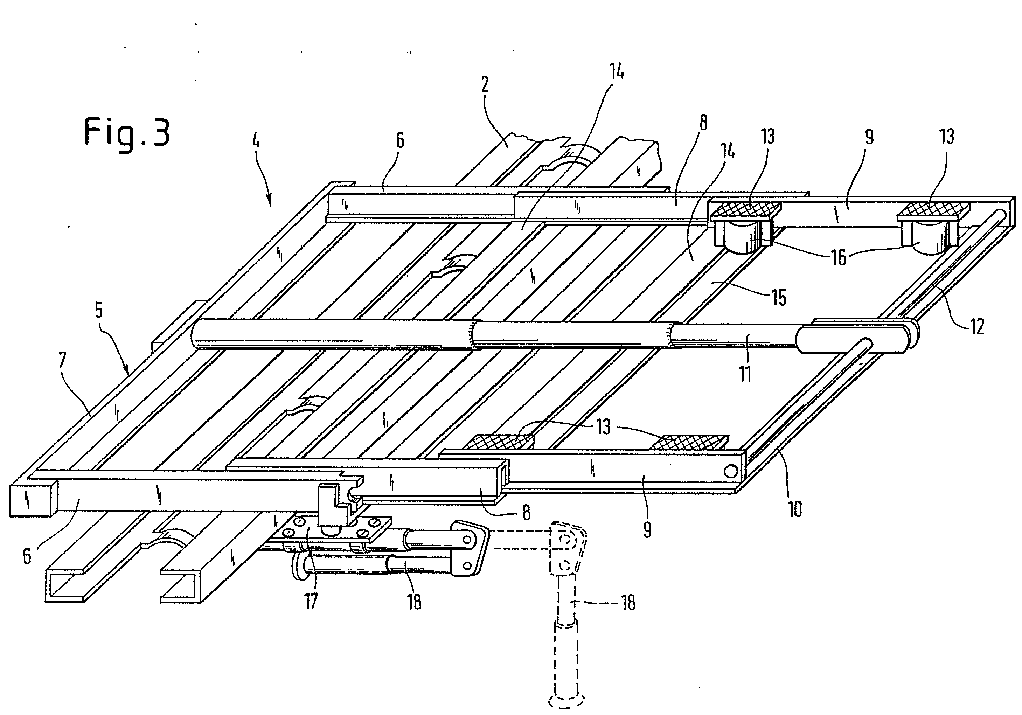

Eine Ladevorrichtung zum seitlichen Absetzen eines Containers ist in Figur 3 gezeigt. Sie besteht aus einem Teleskoprahmen 5 aus zwei quer zur Rahmenachse fest mit diesem verbundenen Profilstreben 6, die miteinander durch eine Querstrebe 7 verbunden sind, sowie aus jeweils zwei weiteren Profilschienen 8 und 9, wobei die letzten Profilschienen 9 wiederum durch eine Querstrebe 10 miteinander verbunden sind. Die Profilschienen 8 gleiten in den ersten fest mit dem Rahmen verbundenen Profilschienen 6, während die zweiten Profilschienen 9 in den Profilschienen 8 gleiten. Der Teleskoprahmen 5 kann mittels einer hydraulisch betätigten Zylinderanordnung 11 ein- und ausgefahren werden, welche mit einem Ende an der Querstrebe 7 und mit dem anderen Ende an einer weiteren Querstrebe 12 verbunden ist, die die vorderen Enden der beiden Profilschienen 9 miteinander verbindet. Die beiden Profilschienen 9 weisen jeweils zwei Auflager 13 auf, auf denen der hier nicht dargestellte Container ruht. Ist der Teleskoprahmen eingefahren, so ruht der Container mit seiner Längsachse mittig oberhalb des Fahrzeugrahmens 2 und ist in dieser Stellung durch hier nicht gezeigte Riegelelemente verriegelt. Die einzelnen beweglichen Profilschienenpaare 8 bzw. 9 können noch durch weitere Querstreben 14 bzw. 15 verbunden werden, so daß sie jeweils einen festen Rahmen bilden. Die vier Auflager 13 an den Profilschienen 9 sind jeweils mit einem Hubzylinder 16 verbunden, durch die sie angehoben und abgesenkt werden können.

Im Bereich der in Figur 3 vorderen festen Profilschiene 6 ist unterhalb des Rahmens noch ein Querträger 17 vorgesehen, mit dem eine klappbare Stütze 18 verbunden ist.

Zum Absetzen des auf dem Lastkraftwagen aufgesetzten Containers wird zunächst die Stütze 18 auf den Boden geschwenkt, wobei es möglich ist, wie in Figur 3 gestrichelt dargestellt, daß die Stütze 18 seitlich ausfahrbar ist. Anschließend wird der Container von dem Fahrzeugrahmen 2 entriegelt und die Zylinderanordnung 11 betätigt. Der Container, der auf den Auflagern 13 ruht, wird beim Ausfahren des Teleskoprahmens 5 seitlich verschoben. Das nach unten wirkende Gewicht des Containers wird durch die Stütze 18 aufgefangen. Ist der Teleskoprahmen vollständig ausgefahren , so befindet sich der Container, wie schematisch in Figur 1 gezeigt , am Absetzort. Anschließend werden die Hubzylinder 16 für die Auflager 13 ausgefahren, so daß der Container insgesamt geringfügig angehoben wird. Mit dem Containerrahmen können dann Stützfüße 19 verbunden werden. Anschließend werden die Hubzylinder 16 geringfügig eingefahren, bis die Stützfüße 19 den Boden berühren und nunmehr den Container tragen. Durch weiteres Einziehen der Hubzylinder 16 kommen die Auflager 13 außer Kontakt mit dem Container, so daß der Teleskoprahmen 5 eingefahren werden kann. Anschließend wird auch die Stütze 18

- 8 -

wieder eingeklappt und eventuell eingefahren. Das Container-Fahrzeug ist anschließend zur Aufnahme eines weiteren Containers bereit. Zum Beladen des Containers kann noch eine Treppe 20 vorgesehen werden, wie dieses schematisch in Figur 2 dargestellt ist.

Das erneute Aufsetzen des abgestellten Containers auf den Lastkraftwagen erfolgt in umgekehrter Reihenfolge, so daß zunächst die Stütze 18 ausgefahren und auf den Boden geklappt wird, anschließend der Teleskoprahmen unter den Container 3 gefahren wird, worauf die Hubzylinder 16 betätigt werden und den Container 3 anheben. Nach Entfernen der Stützfüße 19 kann der Container dann durch Einziehen des Teleskoprahmens 5 auf den Lastkraftwagen transportiert werden, wo er anschließend verriegelt wird. Nach Einklappen und eventuellem Einfahren der Stütze 18 ist das Container-Fahrzeug zur Abfahrt bereit.

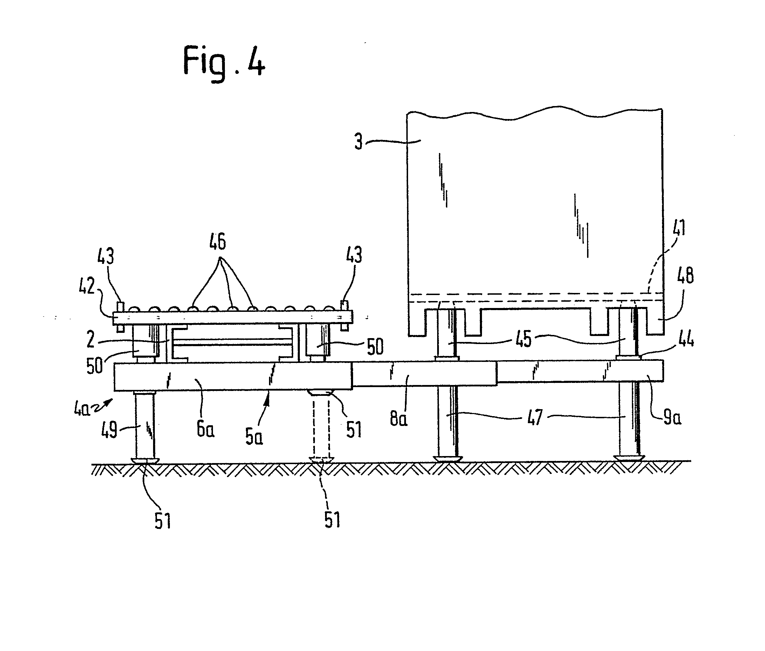

In Figur 4 ist eine weitere Ladevorrichtung 4a in Seitenansicht dargestellt, die wiederum als Teleskoprahmen 5a entsprechend dem obigen Ausführungsbeispiel ausgebildet ist. Der Teleskoprahmen 5a besteht wiederum aus drei Paaren von Profilschienen 6a, 8a und 9a, wobei die Profilschienen 6a fest mit dem Fahrzeug verbunden sind und die beiden anderen Profilschienenpaare 8a bzw. 9a teleskopartig aus- und einfahrbar sind, wie dies oben beschrieben worden ist. Im Gegensatz zu dem obigen Ausführungsbeispiel ist jedoch der Teleskoprahmen 5a unterhalb des Fahrzeugrahmens 2 angeordnet. Im Fahrbetrieb ruht der Container mit seinem Boden 41 auf zwei Querträgern 42, die mit dem Fahrzeugrahmen 2 verbunden sind. Der Container wird durch Riegel 43 arretiert. In den Boden 41 des Containers greifen außerdem noch mit Hubzylindern 44 betätigbare Auflager 45 ein, wie dies in Figur 4 für den bereits ausgefahrenen Container 3 schematisch dargestellt ist. Die Hubzylinder 44 mit den Auflagern sind wiederum an den Profilschienen 9a befestigt.

Soll der Container 3 von dem Container-Fahrzeug abgesetzt werden, so wird zunächst wie bei dem obigen Ausführungsbeispiel eine seitliche, hier nicht dargestellte Stütze ausgeklappt und anschließend die Verriegelung des Containers mit den Riegeln 43 gelöst. Anschließend werden die in Ausfahrrichtung des Teleskoprahmens 5a hinteren Auflager 45 eingefahren, so daß sie unterhalb der unteren Begrenzung des Fahrzeugrahmens 2 zu liegen kommen. Wird jetzt der Teleskoprahmen 5a ausgefahren, so wird der Container , der noch mit den vorderen Auflagern 45 mit den Profilschienen 9a verbunden ist, mitgenommen. Um diese Mitnahmebewegung zu unterstützen, können die Querträger 42 mit Rollen 46 versehen sein, die den Boden 41 des Containers abstützen. Sobald der Teleskoprahmen 5a so weit ausgefahren ist, daß die hinteren Auflager 45 außerhalb des Rahmens liegen, der Container 3 jedoch noch auf dem Querträger 42 aufliegt, werden die hinteren Auflager 45 mittels der Hubzylinder 44 hochgefahren und rasten erneut in dem Boden 41 des Containers ein. Anschließend wird der Teleskoprahmen 5a vollständig ausgefahren. Mit den Hubzylindern 44 sind noch hydraulisch betätigte Standfüße 47 verbunden, die bei ausgefahrenem Teleskoprahmen bis auf den Boden abgelassen werden, so daß jetzt das gesamte Gewicht des Containers 3 auf diesen Standfüßen 47 ruht. Der Container 3 weist an seinem Boden 41 Palettenfüße 48 auf, wobei die duch die Palettenfüße 48 gegebene Bodenfreiheit zwischen dem unteren Ende der Füße und dem Boden 41 so gewählt ist, daß sie größer als die Höhe des Teleskoprahmens 5a ist. Die Palettenfüße 48 sind entweder fest mit dem Container verbunden oder es werden bei ausgefahrenem Container verhältnismäßig kurze Standfüße mit diesem verbunden. Wenn jetzt die Auflager 45 durch die Hydraulikzylinder 44 abgesenkt werden, so umgreifen die Palettenfüße 48 bzw. andere Stützfüße den Teleskoprahmen 5a und ragen nach unten über dessen untere Begrenzung hinaus.

Der gesamte Teleskoprahmen 5a kann anschließend abgesenkt werden. Hierzu sind die beiden Profilschienen 6a des Teleskoprahmens 5a mit Hilfe zweier Führungsrohre 49 geführt, die mittels Hydraulikzylindern 50 auf den Boden absenkbar sind. Die Hydraulikzylinder 50 sind an den Querträgern 42 befestigt. Das eine Führungsrohr 49 ist in Figur 4 in zwei Stellungen gezeigt, wobei die gestrichelte Darstellung das abgesenkte Führungsrohr zeit, während die durchgezogene Stellung das eingezogene Führungsrohr zeigt, welches die Querträger 6a mittels Tellerfüßen 51 gegen den Fahrzeugrahmen drückt. Sind die Führungsrohre 49 bis auf den Boden abgefahren, so können die Standfüße 47 an den Profilschienen 9a mittels der Hydraulikzylinder 44 eingefahren werden, so daß der gesamte Teleskoprahmen nach unten absinkt. Da das Gewicht des Containers 3 auf den Standfüßen 47 ruht, die Profilschienen 6a demnach durch das Gewicht des Containers nicht belastet sind, sinkt der Teleskoprahmen 5a gleichmäßig bis auf den Boden ab. Der Teleskoprahmen 5a kann jetzt unter dem feststehenden Container eingefahren werden; anschließend werden die Hydraulikzylinder 50 betätigt und heben den gesamten Teleskoprahmen 5a wieder in die in Figur 4 gezeigte Ausgangsposition unterhalb des FAhrzeugrahmens 2.

Die Anbringung des Teleskoprahmens 5a unterhalb des Fahrzeugrahmens 2 bietet den Vorteil, daß der gesamte Teleskoprahmen nur geringfügig abgesenkt werden muß, um den Container 3 bis auf den Boden abzusetzen.

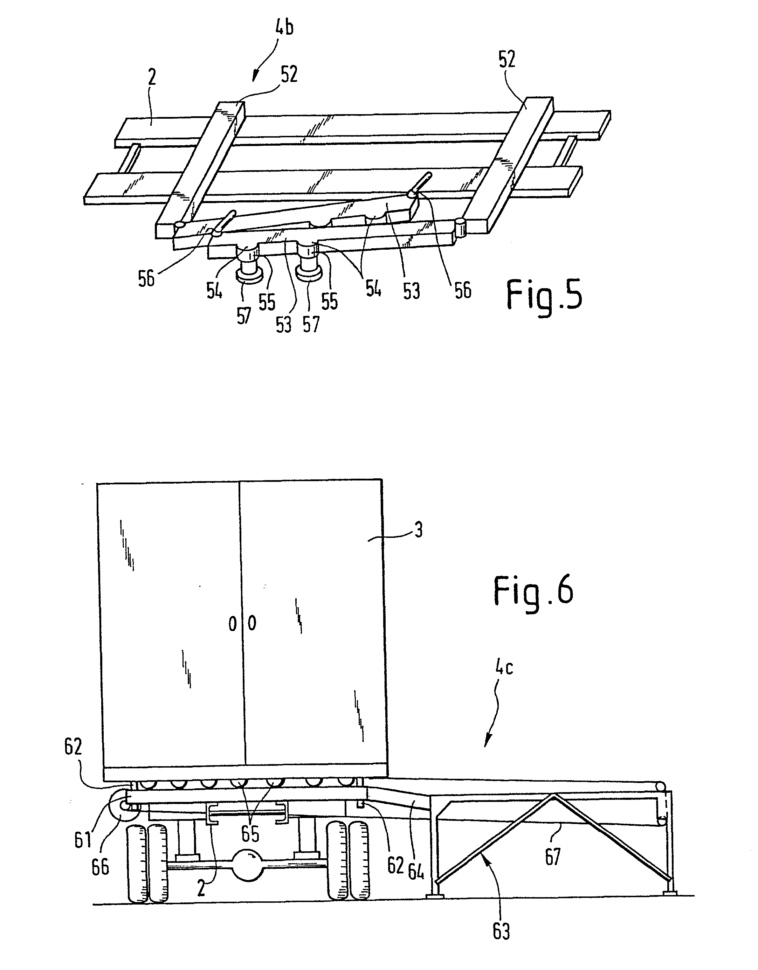

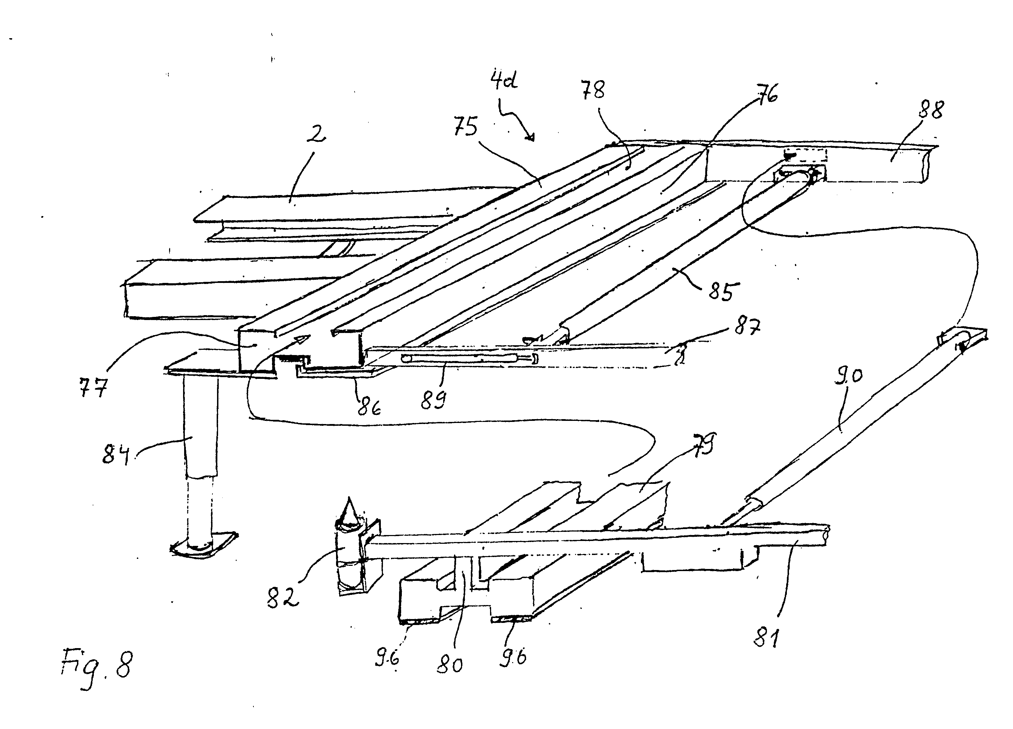

In Figur 5 ist ein Teil einer weiteren Ladevorrichtung 4b dargestellt. Diese Ladevorrichtung weist zwei quer zum Fahrzeugrahmen 2 verlaufende und fest mit diesem verbundene Querstreben 52 auf, auf denen der hier nicht dargestellte Container während des Fahrbetriebes ruht. Zum Arretieren des Containers sind nicht dargestellte Riegelelemente vorgesehen.

Mit den vorderen Enden der beiden Querstreben 52 sind parallel zur Fahrzeugrahmenebene schwenkbare Verlängerungsstreben 53 verbunden. Die Verlängerungsstreben 53 weisen jeweils in ihrem dem freien Ende zugewandten Bereich zwei Auflager 54 auf, in die jeweils ein Hubzylinder 55 integriert ist. Die Verlängerungsstreben 53 werden während des Fahrbetriebes unter den auf den Querstreben 52 ruhenden Container geschwenkt und in dieser Stellung mit Riegeln 56 am Rahmen bzw. untereinander arretiert.

Zum Absetzen des Containers werden die Verlängerungsstreben 53 in die Verlängerung der Querstreben 52 geschwenkt, wobei die freien Enden der Verlängerungsstreben durch hier nicht dargestellte Querstreben noch verbunden werden können. Das Fahrzeug wird, wie zu den obigen Ausführungsbeispielen geschildert, noch mit einer hier nicht dargestellten seitlichen Stütze entsprechend der Stütze 18 abgestützt. Aus den Hubzylindern 55 können nun Standfüße 57 bis auf den Boden ausgefahren werden, so daß die ausgeschwenkten Verlängerungsstreben 53 ein festes Gestell für den abzusetzenden Container bilden. Der Container kann anschließend nach Entriegelung z.B. mit Hilfe einer Seilwinde auf die Verlängerungsstreben 53 gezogen werden, bis er mittig durch die Standfüße 57 abgestützt wird. Es ist möglich, den Container auf der Unterseite mit Rollen zu versehen, die dann auf den Querstreben 52 und den Verlängerungsstreben 53 rollen, so daß der zum Überführen an den Absetzort notwendige Widerstand gering gehalten wird. Zum endgültigen Absetzen kann wie bei dem ersten Ausführungsbeispiel verfahren werden, indem
der Container über die Hubzylinder 55 mit den Auflagern 54 angehoben wird, anschließend Stützfüße an diesem angebracht werden
und der Container leicht abgesenkt wird. Durch weiteres Einfahren der Auflager 54 können dann die Verlängerungsstreben 53
wieder in die Ausgangsposition geschwenkt werden. Diese Verlängerungsstreben 53 können im übrigen zur Vergrößerung ihrer
Länge auch in Art von Teleskopstäben z.B. aus jeweils zwei
Profilschienen aufgebaut sein.

In Figur 6 ist eine weitere Ladevorrichtung 4c gezeigt. Der
Container ist hierbei auf den Rahmen 2 des Container-Fahrzeuges auf Querträgern 61 gelagert und mit Riegeln 62 arretiert. Am gewünschten Aufstellungsort für den abzusetzenden
Container 3 wird ein Gestell 63 aufgestellt, welches über
Führungsstreben 64 mit den ihm zugewandten Enden der Querträger 61 verbunden wird. Der Container 3 kann zur Verringerung des Widerstandes beim Verschieben mit Rollen 65 ausrüstet sein, die auf den Querträgern 61 aufliegen. Mit den
Querträgern 61 ist noch eine Seilwinde 66 verbunden, deren
Seil über Umlenkrollen 68 am äußeren Rand des Gestells geführt und anschließend am Boden des Containers bei 69 eingehängt wird.

Wird der Container 3 entriegelt und die Seilwinde betätigt,
so wird der Container auf seinen Rollen 65 über die Querträger 61 und die Führungsstreben 64 auf das Gestell 63 gezogen. Hier kann er anschließend verriegelt werden. Nach
Aushaken des Seiles 67 und Entfernen der Führungsstreben 64
ist das Container-Fahrzeug zur Aufnahme eines weiteren Containers bereit. Zum Aufladen des Containers von dem Gestell 63
auf das Container-Fahrzeug wird das Seil 67 an dem der Seilwinde zugewandten Seite des Containers eingehängt und über
die Führungsstreben 64 erneut auf die Querträger 61 gezogen.

Hier kann er zum Abtransport mit den Riegeln 62 verriegelt werden.

Bei den beschriebenen Ladevorrichtungen ist bisher davon ausgegangen worden, daß der Container seitwärts von dem Container-
Fahrzeug abgeladen wird. Die Ladevorrichtungen können jedoch
auch nach entsprechender Umordnung dazu dienen, den Container
hinter dem Container-Fahrzeug abzuladen. Eine solche
Konstruktion wird in der Regel für den hinteren Container
(Figur 1) gewählt, da hier ein seitliches Ausfahren oftmals
aufgrund der vorhandenen Fahrzeugräder nicht möglich ist.

Mit einem Container-Fahrzeug gemäß der Erfindung können
Leichtbau-Container auf einfache Weise abgesetzt und wieder
auf das Container-Fahrzeug aufgeladen werden. Die hierfür
notwendigen Kräfte sind relativ gering, da die Überführung
des Containers von dem Container-Fahrzeug zum Abstellort
im wesentlichen durch eine horizontale Gleitbewegung erfolgt.
Die horizontale Bewegung des Containers kann hydraulisch
oder auch durch eine einfache Seilwinde erfolgen; diese
zweite Möglichkeit ist z.B. auch zum Ausfahren der Teleskoprahmen gemäß den obigen Ausführungsbeispielen gegeben. Das
Seil der Winde muß dann entsprechend über mehrere Umlenkrollen geführt werden, um Ein- und Ausfahren zu ermöglichen.

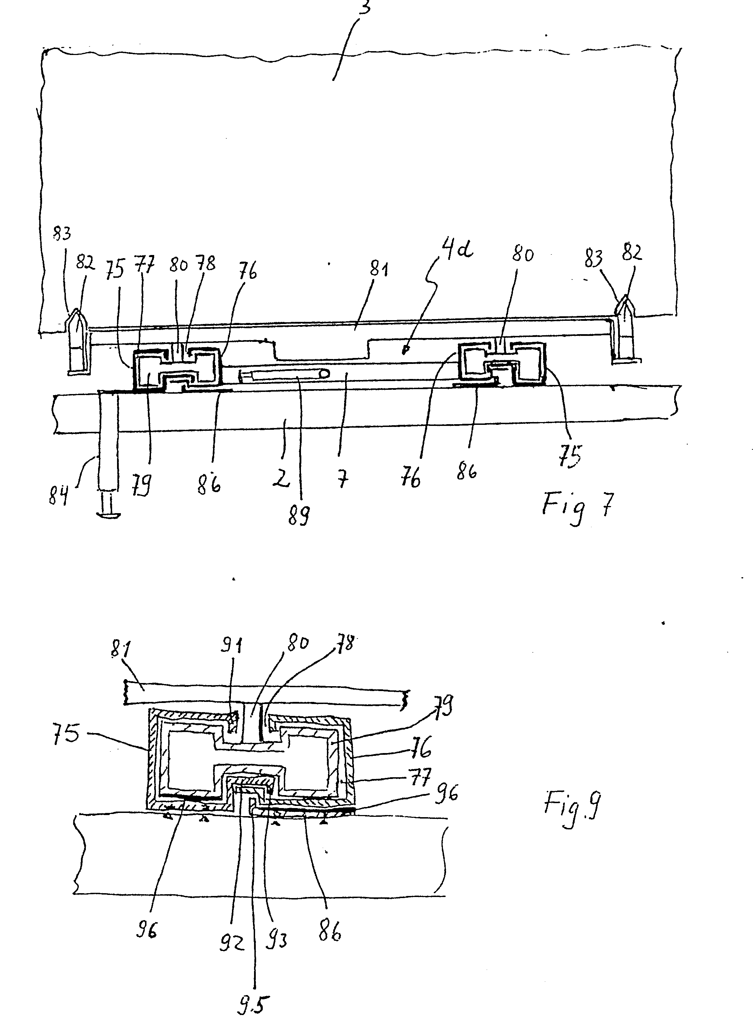

In Figur 7 ist von einem Containerfahrzeug lediglich der
Fahrzeugrahmen 2 dargestellt, auf dem ein Container 3
mit Hilfe einer Ladevorrichtung 4d gehalten und verriegelt
ist. Die Ladevorrichtung 4d ist quer zum Fahrzeugrahmen
ausfahrbar, so daß der Container seitlich von dem nicht
gezeigten Containerfahrzeug abgesetzt werden kann. Selbstverständlich ist auch eine Anordnung möglich, bei der die
Ladevorrichtung parallel zum Fahrzeugrahmen ausgefahren wird,
d.h. der Container hinter dem Fahrzeug abgesetzt wird.

Die Ladevorrichtung besteht im einzelnen aus zwei parallelen,
fest mit dem Fahrzeugrahmen verschweißten C-Profilen 75, zwei
weiteren, ausfahrbaren C-Profilen 76, von denen jeweils
eines in ein entsprechendes festes C-Profil 75 eingreift.
Die beiden C-Profile 75 und 76 sind dabei so aufgebaut, daß
zwischen ihnen ein freier Profilraum 77 mit etwa einem
liegenden Doppel-T-Querschnitt verbleibt, der nach oben
offen ist, so daß zwischen den beiden C-Profilen ein Spalt 78
in Längsrichtung verläuft. In dem freien Profilraum 77 ist
ein drittes ebenfalls ausfahrbares Profil 79 mit einem an
den Profilraum 77 angepaßten Doppel-T-Querschnitt gelagert.
Mit den Doppel-T-Profilen sind nach oben weisende Stützbalken 80 verbunden, die durch den Spalt 78 zwischen den
beiden C-Profilen 75 und 76 hindurchragen. Die Stützbalken 80
sind mit Querträgern 81 verbunden, an deren Enden senkrecht
wirkende Hydraulikzylinder 82 gelagert sind. Die nach oben
weisenden Kolbenstangen der Hydraulikzylinder sind kegelig
ausgebildet und greifen in entsprechende Ausnehmungen 83
am Boden des Containers ein. Hierdurch wird der Container
an vier Punkten gehalten.

Soll der Container seitlich von dem Fahrzeug geschoben und
abgesetzt werden, so wird zunächst zumindest an einem der
beiden festen C-Profile 75 eine Bodenstütze , z.B. eine
hydraulische Bodenstütze 84 ausgefahren und nach Auflage
auf dem Boden verriegelt. Anschließend wird mit Hilfe
eines Hydraulikzylinders 85 das zweite C-Profil 76, welches
auf einer Gleitschiene 86 ruht, ausgefahren. Die beiden
C-Profile sind durch    einen vorderen Querträger 87 miteinander verbunden, an dem auch die Kolbenstange des Hydraulikzylinders 85 angreift. Das andere Ende des Hydraulikzylinders ist an einer mit dem festen C-Profil 75 verbundenen Querstrebe 88 befestigt. Ist dieses C-Profil 76 ausgefahren, so werden eine oder mehrere Bodenstützen 89 an der vorderen Querstrebe 87 nach unten abgeklappt und nach Abstützen auf dem Boden verriegelt. Nunmehr ist ein abgestützter Führungsweg für das ausfahrbare Doppel-T-Profil 79 eingerichtet. Dieses wird mit Hilfe eines weiteren Hydraulikzylinders 90 ausgefahren, der an seinem einen Ende mit der erwähnten hinteren Querstrebe 88 und mit seiner Kolbenstange an dem vorderen Querträger 81 abgestützt ist. Ist auch dieses Doppel-T-Profil 79 ausgefahren, so wird der mitgenommene Container 3 durch die Hydraulikzylinder 82 geringfügig angehoben. Anschließend werden am Boden des Containers Standfüße eingesetzt, die nach Einfahren der Hydraulikzylinder 82 sich auf dem Boden abstützen und den Container jetzt festhalten. Durch weiteres Absenken der Hydraulikzylinder 82 gleiten deren konische Spitzen aus den Ausnehmungen 83; die einzelnen Profile können jetzt in umgekehrter Reihenfolge wieder eingefahren werden.

Eine mögliche Form für die Profile geht aus der Darstellung in Figur 9 hervor. Das feste Profil 75 hat die Form eines rechteckigen C, wobei an dem oberen Querschenkel ein kleiner nach unten weisender Kragen 91 vorgesehen ist. Der untere horizontale Schenkel des C-Profils ist mit dem Fahrzeugrahmen verschweißt. An diesem unteren horizontalen Schenkel schließt sich ein L-Stück an, dessen erster Schenkel vertikal nach oben und dessen zweiter Schenkel horizontal verläuft. Dieser horizontale Schenkel dient als Gleitbahn 92 für das andere ausfahrbare C-Profil 76, welches spiegelbildlich zu dem ersten festen C-Profil 75 ausgebildet ist. Der horizontale Schenkel dessen L-Stückes liegt unterhalb des horizontalen Schenkels 92 des C-Profils 75. Das Ende des L-Stückes 92 ist mit einem nach unten weisenden Kragen 93 versehen, der an dem vertikalen Schenkel des L-Stückes des C-Profils 76 anliegt. Das ausfahrbare C-Profil 76 gleitet mit dem horizontalen Schenkel auf der Gleitschiene 86, die mit dem Fahrzeugrahmen verschweißt ist. An dem inneren Ende weist diese Schiene 86 einen nach oben weisenden Kragen 95 auf, der den vertikalen Schenkel des L-Stückes dieses Profilstückes 76 umgreift. Die Gleitflächen, auf denen das C-Profil 76 beim Ausfahren gleitet, sind entsprechend behandelt, z.B. kunststoffbeschichtet oder mit Wälzlagern bestückt. Zwischen den beiden C-Profilen 75 und 76 wird durch die Konstruktion der erwähnte freie Profilraum 77 gebildet, wobei zwischen den Kragen an den oberen horizontalen Schenkeln der C-Profile der Spalt 78 verbleibt. In den Profilraum greift das erwähnte Doppel-T-Profil 79 ein, welches z.B. ein geformtes Hohlprofil, jedoch auch ein Vollprofil sein kann. Dieses Profil gleitet mit den beiden horizontalen unteren Schenkeln des Doppel-T auf den unteren horizontalen Schenkeln der beiden Profile 75 und 76 und/oder mit seinem Mittelteil auf der Gleitbahn 92. Auch hier sind die Gleitflächen wie oben erwähnt entsprechend behandelt, z.B. mit einem Kunststoffgleitbelag 26 versehen; vgl. auch Figur 8. Der Stützbalken 80 greift dann durch den Spalt 78 hindurch; mit den Stützbalken sind die Querträger 81 für den Container verbunden.

Manfred Schaller, Vorhölzerstr. 3, 8000 München 71


Container-Fahrzeug


P a t e n t a n s p r ü c h e


1. Container-Fahrzeug bestehend aus einem Wagen mit einem
Rahmen sowie aus einem auf dem Wagenrahmen gehaltenen
und von diesem mittels einer Ladevorrichtung absetzbaren
und wieder auf das Fahrzeug aufsetzbaren Container, dadurch g e k e n n z e i c h n e t , daß die Ladevorrichtung (4) ein mit dem Wagenrahmen (2) verbindbares
und an den Absetzort für den Container (3) anzuordnendes
Gestell (5, 9, 19; 53; 63) aufweist, auf das der Container
(3) in einer im wesentlichen horizontalen Bewegung überführbar ist.

2. Container-Fahrzeug nach Anspruch 1, dadurch gekennzeichnet, daß die Ladevorrichtung (4) einen mit dem Fahrzeugrahmen (2) verbundenen Teleskoprahmen aus mehreren ineinander fahrenden Profilschienen (6, 8, 9) aufweist, wobei der Container auf Auflagern (13, 45) an den am weitesten ausfahrbaren Profilschienen (9, 9a) gelagert ist, und daß diese Auflager durch eine Hubvorrichtung (16, 44) höhenverstellbar sind.

3. Container-Fahrzeug nach Anspruch 2, dadurch gekennzeichnet, daß der Container (3) mit Stützfüßen (19) bzw. einem Stützgestell (48) versehen ist, auf das er durch Betätigen der Hubvorrichtung (16, 44) an den Auflagern (13 , 45) auf den Boden absetzbar ist.

4. Container-Fahrzeug nach einem der Ansprüche 2 und 3, dadurch gekennzeichnet, daß die Hubvorrichtungen (16, 44) für die Auflager (13, 45) Hydraulikzylinder sind.

5. Container-Fahrzeug nach einem der vorhergehenden Ansprüche 2 bis 4, dadurch gekennzeichnet, daß der Teleskoprahmen (5) hydraulisch (Zylinderanordnung 11) ein- und ausfahrbar ist.

6. Container-Fahrzeug nach einem der vorhergehenden Ansprüche 2 bis 5, dadurch gekennzeichnet, daß der Teleskoprahmen (5a) der Ladevorrichtung (4a) im ausgefahrenen Zustand insgesamt absenkbar ist.

7. Container-Fahrzeug nach Anspruch 6, dadurch gekennzeichnet, daß die am weitesten ausfahrbaren Schienen (9a) des Teleskoprahmens (5a) ausfahrbare Standfüße (47) aufweisen, und daß die nicht fahrbaren Profilschienen (6a) zum Absenken des Teleskoprahmens (5a) längs Führungsrohren (49) geführt sind.

8. Container-Fahrzeug nach Anspruch 7, dadurch gekennzeichnet, daß die Standfüße (47) und die Führungsrohre (49) hydraulisch (Hydraulikzylinder 44 und 50) aus- und einfahrbar sind.

9. Container-Fahrzeug nach einem der vorhergehenden Ansprüche, dadurch gekennzeidnet, daß die Ladevorrichtung (4) mit den Fahrzeugrahmen (2) verbundene Querträger (42, 61) zum Unterstützen des auf dem Container-Fahrzeug gehaltenen Containers aufweist, und daß zum Erleichtern des Ladevorganges zwischen Querträger und Container Rollen (46, 65) vorgesehen sind.

10. Container-Fahrzeug nach Anspruch 1, dadurch gekennzeichnet, daß die Ladevorrichtung (4b) mit dem Fahrzeugrahmen (2) verbundene Querträger (52) aufweist, auf denen der Container gelagert ist, und daß mit jeweils einem Ende dieser Querträger (52) Verlängerungsstreben (53) schwenkbar verbunden sind, die nach Ausschwenken am Absetzort des Containers abstützbar sind (Standfüße 57), und auf denen der Container bis zu seinem Aufstellungsort verschiebbar ist, und daß die Verlängerungsstreben durch Hubvorrichtungen (55) höhenverstellbare Auflager (54) für den Container aufweisen.

11. Container-Fahrzeug nach Anspruch 1, dadurch gekennzeichnet, daß die Ladevorrichtung (4c) ein am Absetzort für den Container (3) aufzustellendes Gestell (63) aufweist, und daß dieses Gestell über Führungsstreben (64) mit Querträgern (61) an dem Fahrzeugrahmen zur Unterstützung des Containers (3) verbindbar ist.

12. Container-Fahrzeug nach Anspruch 10, dadurch gekennzeichnet, daß die Ladevorrichtung (4c) eine Seilwinde (66) zum Ziehen des Containers von den Querträgern (61) auf das Gestell (63) bzw. von dem Gestell auf die Querträger aufweist.

13. Container-Fahrzeug nach Anspruch 12,dadurch gekennzeichnet, daß die Seilwinde (66) an dem Fahrzeugrahmen (2) befestigt ist, und daß an dem Gestell (63) Umlenkrollen (68) für das Seil (67) der Seilwinde vorgesehen sind.

14. Container-Fahrzeug nach Anspruch 2, dadurch gekennzeichnet, daß die Ladevorrichtung aufweist:

zwei ineinandergreifende Profile (5, 6), von denen eines (5) mit dem Fahrzeugrahmen (2) verbunden ist und das andere (6) in Profillängsrichtung ausschiebbar ist, zwischen denen ein offener Profilraum (7) verbleibt, der nach oben durch einen Spalt (8) zwischen den beiden Profilen (5, 6) geöffnet ist, und

ein in dem offenen Profilraum (7) der beiden Profile (5, 6) gleitendes drittes ausfahrbares Profil (9), welches durch den Spalt (8) hindurchragende Stützelemente (10) für die Last (3) trägt.

15. Fahrzeug nach Anspruch 14, dadurch gekennzeichnet, daß für jede Ladevorrichtung (4) zwei derartige parallele Profilkonstruktionen vorhanden sind, wobei die beiden festen Profile (5) auf der einen Seite durch Querstreben (18) und die beiden ausfahrbaren Profile (6, 9) an ihrer Vorderseite jeweils durch Querstreben (17, 11) miteinander verbunden sind.

16. Fahrzeug nach Anspruch 15, dadurch gekennzeichnet, daß für beide ausfahrbaren Profile (6, 9) je ein Hydraulikzylinder (15, 20) vorgesehen ist, die sich jeweils an der festen Querstrebe (18) der festen Profile und an den vorderen Querstreben (17, 11) der ausfahrbaren Profile abstützen.

17. Fahrzeug nach einem der Ansprüche 14 bis 16, dadurch gekennzeichnet, daß am vorderen Ende des festen Profiles (5) und am vorderen Ende des in dieses Profil eingreifenden ausfahrbaren Profiles (6) Bodenstützen (14, 19) vorgesehen sind.

18. Fahrzeug nach einem der Ansprüche 14 bis 17, dadurch gekennzeichnet, daß die durch den Spalt (8) der beiden ineinander greifenden Profile (5, 6) hindurchragenden Stützelemente durch Querträger (11) miteinander verbunden sind, an deren Enden Hubzylinder (12) angeordnet sind, die die Last (3) abstützen.

19. Fahrzeug nach einem der Ansprüche 14 bis 18, dadurch gekennzeichnet, daß die ineinandergreifenden Profile (5, 6) als gegeneinander offene C-Profile ausgebildet sind, die im Bereich der unteren horizontalen C-Schenkel (bei 22) aufeinander gleiten.

20. Fahrzeug , nach Anspruch 19, dadurch gekennzeichnet, daß mit dem unteren horizontalen Schenkel der C-Profile (5, 6) jeweils ein L-Profil (22) mit dessen vertikalen Schenkel verbunden ist, und daß die beiden Profile auf den horizontalen L-Schenkeln (bei 22) aufeinander gleiten.

21. Fahrzeug nach Anspruch 20, dadurch gekennzeichnet, daß der horizontale Schenkel (22) des festen C-Profils (5) oberhalb des horizontalen L-Schenkels des ausfahrbaren C-Profils angeordnet ist und einen den vertikalen L-Schenkel dieses Profiles (6) umgreifenden Kragen (23) aufweist.

22. Fahrzeug nach einem der Ansprüche 19 bis 22, dadurch gekennzeichnet, daß der untere horizontale Schenkel des ausfahrbaren C-Profils (6) auf einer mit dem Fahrzeugrahmen verbundenen Gleitschiene (16) gleitet, die einen den C-Schenkel umgreifenden Kragen (25) aufweist.

23. Fahrzeug nach einem der Ansprüche 22 bis 22, dadurch gekennzeichnet, daß das in dem freien Profilraum (7) der beiden C-Profile (6, 7) gleitende Profil (9) einen Doppel-T-Querschnitt aufweist.

24. Fahrzeug nach einem der Ansprüche 14 bis 23 dadurch gekennzeichnet, daß die Gleitflächen (22, 16) der Profile (5, 6, 9) kunststoffbeschichtet sind (bei 26).

Fig. 1

Fig.2

Fig.3

2/6

0118586

# Fig. 4

**Fig.5**

**Fig.6**

Fig. 8

Fig 7

Fig. 9